# EUROPÄISCHE PATENTSCHRIFT

(11) **EP 2 090 618 B1**
(45) Veröffentlichungstag und Bekanntmachung des Hinweises auf die Patenterteilung: **09.11.2011**
(21) Anmeldenummer: 09000782.4
(22) Anmeldetag: 21.01.2009
(51) Int. Cl.: C08L 63/00, C08L 67/00, C08G 63/692, C09K 21/12, C09K 21/14

(54) **Härtbare Epoxidharzformulierungen mit Polyester-Flammschutzmittel**
Hardenable epoxy resin formulation with polyester flame retardant
Formule de résine époxyde durcissable avec un produit ignifuge polyester

(30) Priorität: 15.02.2008 DE 102008009298
(43) Veröffentlichungstag der Anmeldung: 19.08.2009
(73) Patentinhaber: Schill + Seilacher "Struktol" GmbH, 22113 Hamburg (DE)
(72) Erfinder: Just, Berthold, Dr., 22397 Hamburg (DE); Imeri, Seljam, 22117 Hamburg (DE); Keller, Holger, Dr., 21391 Reppenstedt (DE); Storzer, Uwe, Dr., 72076 Tübingen (DE)
(74) Vertreter: Prinz & Partner

(56) Entgegenhaltungen:
- WO-A1-2005/005512
- US-A1- 2005 038 279
- DATABASE WPI Week 200923 Thomson Scientific, London, GB; AN 2009-E09322 XP002562773 & CN 101 307 171 A (TIANJIN KAIHUA ISOLATING MATERIALS CO LTD) 19. November 2008 (2008-11-19)
- DATABASE CAPLUS [Online] CHEMICAL ABSTRACTS SERVICE, COLUMBUS, OHIO, US; 2000, "Flame retardant photosensitive epoxy resin derivatives" XP002562775 Database accession no. 2002:707263 & JP 2002 265567 A 18. September 2002 (2002-09-18)
- DATABASE CAPLUS [Online] CHEMICAL ABSTRACTS SERVICE, COLUMBUS, OHIO, US; 2000, "Halogen-free fire resisatant epoxy resin compositions and their prepregs and laminates" XP002562774 Database accession no. 2002:423930 & JP 2002 161197 A (SUMITOMO BAKELITE CO.) 4. Juni 2002 (2002-06-04)
- HUSSAIN M. ET AL: "Development and characterisation of a fire retardant epoxy resin using an organo-phosphorous" JOURNAL OF MATERIALS SCIENCE LETTERS, Bd. 22, Nr. 6, 2003, Seiten 455-458, XP008116955 ISSN: 0261-8028

## Beschreibung

Die Erfindung betrifft härtbare Epoxidharzformulierungen, die ein Polyester-Flammschutzmittel enthalten.

Die für viele Verwendungszwecke vorgeschriebene Flammfestmachung von Kunstharzen wie Epoxidharzen wurde ursprünglich durch Einarbeitung von herkömmlichen Flammschutzmitteln wie zum Beispiel Antimontrioxid (Sb₂O₃) oder hochbromierten bzw. hochchlorierten organischen Verbindungen in die Kunstharz-Zusammensetzungen erreicht. Beispiele für solche hochbromierten bzw. hochchlorierten organischen Verbindungen sind Tetrabromphthalsäure, Dibromneopentylglykol und 1,4,5,6,7,7-Hexachlor-5-norbornen-2,3-dicarbonsäure, die auch als HET-Säure oder Chlorendic acid bezeichnet wird. Daneben werden auch Addukte aus Acryl- bzw. Methacrylsäure und dem Diglycidylether von Tetrabrombisphenol A verwendet. Abgesehen von den toxikologischen Risiken, führt die Verwendung solcher traditioneller Flammschutzmittel zu einer dramatischen Änderung der mechanischen und physikalischen Eigenschaften der damit ausgerüsteten Kunstharze.

Es ist deshalb schon lange bekannt, halogenfreie Flammschutzmittel wie Aluminiumtrihydroxid, Magnesiumhydroxid, Ammoniumpolyphosphat, verkapselten roten Phosphor und das sowohl Phosphor als auch Stickstoff enthaltende Melaminpolyphosphat zu verwenden. Diese müssen jedoch oft in Kombination mit Blähgraphit als Synergisten eingesetzt werden. Nachteilig an den genannten halogenfreien additiven Flammschutzmitteln ist jedoch, daß sie hochschmelzende Feststoffe sind, die weder in ausreichendem Maße in den Kunstharzformulierungen gelöst noch eingemischt werden können.

Bei Verwendung des für andere Harzformulierungen als Flammschutzmittel bekannten 9,10-Dihydro-9-oxa-10-phospha-phenanthren-10-oxid (DOPO) in Epoxidharzen ist eine Verschlechterung der Schlagzähigkeit zu beobachten.

Aus der DE 26 46 218 A1 und der entsprechenden US 4 157 436 A1 sind phosphorhaltige Flammschutzmittel bekannt, die durch Addition von DOPO an eine ungesättigte Verbindung mit wenigstens einer esterbildenden funktionellen Gruppe und weitere Umsetzung mit einer esterbildenden Verbindung erhalten werden, die aus Dicarbonsäuren oder esterbildenden Derivaten davon, Diolen oder esterbildenden Derivaten davon sowie Oxycarbonsäuren oder esterbildenden Derivaten davon ausgewählt sind. Diese phosphorhaltigen Flammschutzmittel werden dann mit Dicarbonsäuren wie Terephthalsäure und einem Glykol zu flammfesten Polyestern umgesetzt.

Die DE 103 30 774 A1 beschreibt flammhemmend modifizierte, phosphorhaltige Copolyester, die durch Polykondensation der bei der Veresterung mindestens einer Dicarbonsäure mit mindestens einem Diol in Gegenwart einer flammhemmenden bifunktionellen Additionsverbindung von DOPO an eine ungesättigte Dicarbonsäure, wie beispielsweise Itaconsäure, und mindestens einer weiteren davon verschiedenen bifunktionellen phosphorhaltigen Verbindung entstehenden Produkte erhältlich sind. Als weitere bifunktionelle phosphorhaltige Verbindung ist unter anderem 2-Metyl-2,5-dioxo-1-oxa-2-phospholan genannt. Bevorzugt werden jedoch glykolisierte Derivate des beschriebenen Oxaphosphoians eingesetzt.

Der Erfindung liegt die Aufgabe zugrunde, flammfeste Epoxidharzformulierungen mit halogenfreien Flammschutzmitteln bereitzustellen, die nicht toxisch und gut verarbeitbar sind und zudem ausgehärtete Epoxidharze ergeben, die gleiche oder bessere Materialeigenschaften aufweisen als Epoxidharze aus dem Stand der Technik.

Diese Aufgabe wird erfindungsgemäß durch eine härtbare Epoxidharzformulierung gemäß Anspruch 1 gelöst.

Ungesättigte Verbindungen im Sinne der Erfindung sind solche mit Kohlenstoff-Kohlenstoff-Doppelbindungen. Die reaktiven funktionellen Gruppen des phosphorhaltigen Polyesters sind vorzugsweise gegenüber Epoxiden reaktiv, so daß eine Vernetzung mit Epoxidharzen erfolgen kann.

Es hat sich überraschenderweise gezeigt, daß man durch Zusatz des als phosphorhaltiger Polyester vorliegenden Flammschutzmittels zur vernetzbaren Epoxidharzformulierung halogenfreie flammfest ausgerüstete Epoxidharze mit gleichzeitig wesentlich verbesserter Schlagzähigkeit erhalten kann. Das Polyester-Flammschutzmittel ist außerdem gut in der Epoxidharzformulierung löslich, so daß eine homogene und transparente halogenfreie Formulierung entsteht, die gut zu verarbeiten ist. Die gehärteten Epoxidharze mit dem Polyester-Flammschutzmittel erfüllen im allgemeinen die Brandschutznorm UL 94 V-0 der Underwriters' Laboratories (USA).

Vorzugsweise weist der phosphorhaltige Polyester endständige Phosphinsäuregruppen als reaktive funktionelle Gruppen auf. Die Phosphinsäuregruppen lassen sich leicht mit Epoxiden umsetzen und gewährleisten somit, daß der Polyester fest an die Epoxidharze angebunden werden kann.

Das zur Herstellung des phosphorhaltigen Polyesters bzw. Polyester-Flammschutzmittels verwendete phosphorhaltige Monomer umfaßt bevorzugt eine Verbindung der folgenden Formel (I): 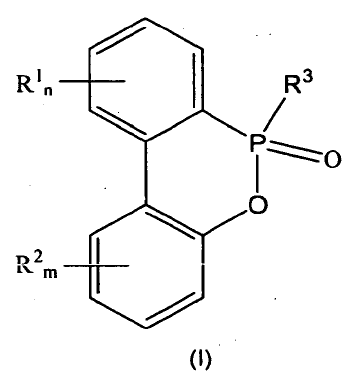 worin R¹ und R² gleich oder verschieden sind und jeweils unabhängig voneinander Alkyl, Alkoxy, Aryl, Aryloxy oder Aralkyl bedeuten, n und m ganze Zahlen von 0 bis 4 sind und R³ einen Rest darstellt, der wenigstens eine esterbildende Gruppe enthält. Bevorzugt sind R¹ und R² jeweils C₁₋₈-Alkyl oder C₁₋₈-Alkoxy, n und m sind 0 oder 1 und R³ ist abgeleitet von einer ungesättigten Mono- oder Dicarbonsäure oder einem Dicarbonsäureanhydrid, einem ungesättigten, ein- oder mehrwertigen Alkohol oder einer ungesättigten Hydroxycarbonsäure.

Das zur Herstellung des Polyester-Flammschutzmittels eingesetzte phosphorhaltige Monomer kann insbesondere ein Addukt von DOPO oder einem kernsubstituierten DOPO-Derivat an eine ungesättigte, ein- oder mehrwertige Carbonsäure oder deren Anhydride sein. Des weiteren können Addukte von DOPO oder einem kernsubstituierten DOPO-Derivat an einen ungesättigten, ein- oder mehrwertigen Alkohol, allein oder im Gemisch mit den vorgenannten DOPO-Carbonsäure- oder DOPO-Anhydrid-Addukten, als Monomere zur Herstellung des Polyester-Flammschutzmittels eingesetzt werden.

Gemäß der in der Technik bekannten Herstellung von Polyestern durch Polykondensation von Hydroxycarbonsäuren kann schließlich auch ein Addukt von DOPO oder einem kernsubstituierten DOPO-Derivat an eine ungesättigte Hydroxycarbonsäure verwendet werden. In diesem Fall ist der Zusatz eines weiteren esterbildenden Monomers nur erforderlich, falls ein höherer Anteil an reaktiven Gruppen in das Polyester-Flammschutzmittel eingebracht werden soll.

Bevorzugte ungesättigte Mono- oder Dicarbonsäuren zur Umsetzung mit DOPO sind Ölsäure, Linolsäure, Sorbinsäure, Acrylsäure und Crotonsäure sowie Itaconsäure, Maleinsäure, Fumarsäure, Endomethylentetrahydrophthalsäure, Linolensäure, Citraconsäure, Mesaconsäure, Abietinsäure, Dextropimarsäure, Laevopimarsäure, trimere Fettsäuren sowie Tetrahydrophthalsäureanhydrid. Ganz besonders bevorzugt sind Sorbinsäure, Itaconsäure und Maleinsäure. Beispiele für ungesättigte ein- oder mehrwertige Alkohole zur Umsetzung mit DOPO sind Isoprenol, Allylalkohol, Butenol, Hexenol, Propargylalkohol, Cyclohexenol, Cyclohexendiol und Butendiol. Besonders bevorzugt sind die zweiwertigen ungesättigten Alkohole wie Cyclohexendiol und Butendiol. Ein Beispiel für eine ungesättigte Hydroxycarbonsäure ist Ricinolsäure. Bevorzugte ungesättigte Carbonsäureanhydride sind Itaconsäure und Maleinsäure. Ganz besonders bevorzugt ist das DOPO-Addukt an Maleinsäureanhydrid, das gemäß dem nachfolgend dargestellten Reaktionsschema erhalten werden kann:

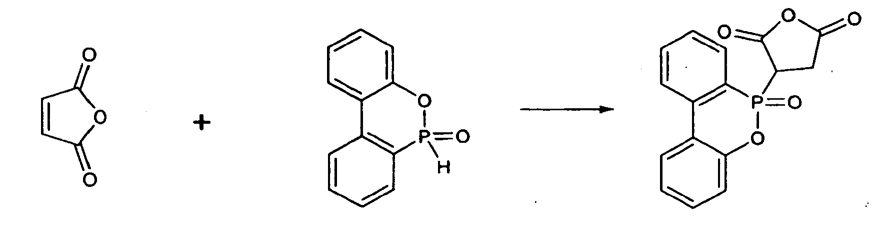

Das zur Herstellung des Polyester-Flammschutzmittels eingesetzte esterbildende Monomer ist bevorzugt aus der Gruppe der gesättigten und ungesättigten Mono- und Dicarbonsäuren, gesättigten und ungesättigten Carbonsäureanhydriden, und der gesättigten und ungesättigten ein- und mehrwertige Alkohole ausgewählt. Besonders bevorzugte esterbildende Monomere sind aliphatische Diole wie Monoethylenglykol, Diethylenglykol, Propylenglykol, Butandiol und Neopentylglykol, aliphatische Dicarbonsäuren und deren Anhydride wie Maleinsäure und Maleinsäureanhydrid, Itaconsäure und Itaconsäureanhydrid sowie Adipinsäure, oder aromatische Dicarbonsäuren wie Terephthalsäure. Ein bevorzugter mehrwertiger Alkohol ist Tris-2-hydroxyethylisocyanurat (THEIC).

Gemäß einer bevorzugten Ausführungsform ist das Polyester-Flammschutzmittel bzw. der phosphorhaltige Polyester durch Polykondensation des Addukts von DOPO oder einem ringsubstituierten DOPO-Derivat an eine ungesättigte Mono- oder Dicarbonsäure oder ein ungesättigtes Carbonsäureanhydrid, bevorzugt Maleinsäureanhydrid, und einem esterbildenden Monomer gebildet, das einen gesättigten zweiwertigen Alkohol wie Monoethylenglykol umfaßt.

Gemäß einer weiteren bevorzugten Ausführungsform umfaßt das esterbildende Monomer ein Oxaphospholan, so daß durch die Polykondensation mit den vorgenannten phosphorhaltigen Monomeren und den esterbildenden Monomeren ein phosphorhaltiger Polyester mit reaktiven Phosphinsäure-Endgruppen entstehen kann.

Das Oxaphospholan ist vorzugsweise ausgewählt aus Verbindungen der folgenden Formel (II): 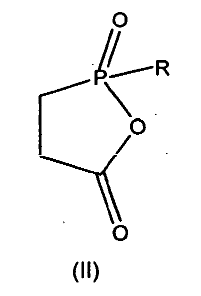 worin R Alkyl oder Aryl, vorzugweise C₁₋₆-Alkyl und ganz besonders bevorzugt Methyl, Ethyl oder Phenyl bedeutet.

Eine ganz besonders bevorzugte Ausführungsform des Polyester-Flammschutzmittels ist erhältlich durch Polykondensation des DOPO-Addukts an Maleinsäureanhydrid mit Monoethylenglykol und Methyl-substituiertem Oxaphospholan gemäß dem nachfolgend dargestellten Reaktionsschema: 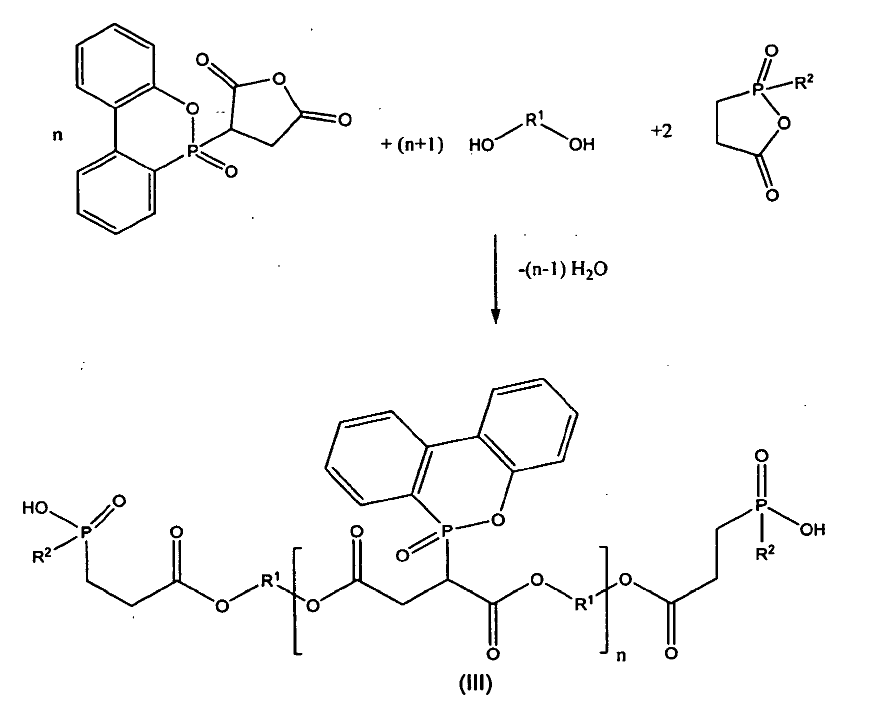 worin R¹ = CH₂ - CH₂ und R² = CH₃ bedeutet, und n die Molfraktion des phosphorhaltigen Monomers in der Polyesterkette bedeutet. Vorzugsweise ist n eine ganze Zahl zwischen 1 und 10. Wegen der geringeren Veresterungsreaktivität der Phosphinsäuregruppen im Vergleich zu Carboxygruppen kann davon ausgegangen werden, daß der Hauptanteil der Phosphinsäuregruppen im Polyester der obigen Formel (III) endständig ist. Es ist jedoch auch denkbar, daß die Phosphinsäuregruppen wenigstens teilweise in das Grundgerüst des Polyesters eingebaut sind, so daß ein Polyester mit endständigen Carbonsäuregruppen erhalten wird.

Der Phosphorgehalt des phosphorhaltigen Polyesters läßt sich nahezu stufenlos einstellen und beträgt vorzugsweise zwischen etwa 5 und 12 Gew.-%, besonders bevorzugt zwischen etwa 8 und 10 Gew.-%. Das mittlere Molekulargewicht des phosphorhaltigen Polyesters liegt zwischen etwa 1000 und 10000 g/mol, vorzugsweise zwischen etwa 1000 und 5000 g/mol. Bei einem höheren Molekulargewicht kann es zu unerwünschten Änderungen der Materialeigenschaften kommen. Außerdem lassen sich höhermolekulare Polyester nur sehr schwer handhaben.

Erfindungsgemäß umfasst die härtbare Epoxidharzformulierung ein Epoxidharz und das Polyester-Flammschutzmittel, wobei die reaktive funktionelle Gruppe des phosphorhaltigen Polyesters vorzugsweise eine Carbonsäuregruppe oder eine Phosphinsäuregruppe ist. Diese Gruppen können leicht mit Epoxiden umgesetzt werden, so daß eine feste Verknüpfung zwischen der Harzmatrix und dem Polyester-Flammschutzmittel erfolgt. Ganz besonders bevorzugt ist das in den Epoxidharzformulierungen verwendete Polyester-Flammschutzmittel durch Polykondensation des DOPO-Addukts an Maleinsäure oder Maleinsäureanhydrid mit Monoethylenglykol oder Propylenglykol und Oxaphospholan, insbesondere des oben dargestellten Oxaphospholans mit R = Methyl oder Phenyl, hergestellt.

Das Epoxidharz ist vorzugsweise aus der Gruppe der Epoxynovolake und Glycidylether von Bisphenolen und aliphatischen Polyolen ausgewählt. Besonders bevorzugt sind Epoxidharze auf der Grundlage des Diglycidylethers von Bisphenol A (DGEBA).

Die Epoxidharzformulierung kann darüber hinaus auch die üblicherweise verwendeten Härtungsmittel enthalten, wie beispielsweise Polycarbonsäuren und deren Anhydride, Amine, Polyamine, Polyaminoamide, aminogruppenhaltige Addukte, Guanidine, Cyanguanidine, aliphatische oder aromatische Polyole oder katalytisch wirkende Härtungsmittel. Vorzugsweise ist das Härtungsmittel Dicyandiamid, ein Amin oder ein Aminderivat.

Darüber hinaus können die Epoxidharzformulierungen auch Beschleuniger für die Vernetzungsreaktion mit dem Härter enthalten. Geeignete Beschleuniger sind die im Stand der Technik bekannten Harnstoffderivate, Imidazole und tertiären Amine sowie deren Salze.

Schließlich können die Epoxidharzformulierungen auch die üblichen anorganischen und organischen Füllstoffe, Modifikatoren und Verstärkungsmaterialien enthalten. Bekannte Füllstoffe sind mineralische und faserförmige Füllstoffe wie Quarzmehl, Aluminiumoxyd, Glaspulver, Glimmer, Kaolin, Dolomit, Graphit, Ruß sowie Kohlefasern und Textilfasern. Als Verstärkungsmaterialien eignen sich insbesondere Glasfasern, Kohlenstofffasern und Kunststofffasern. Bekannte Modifikatoren sind Silikone und Kautschuk.

Die Härtung der Epoxidharzformulierungen erfolgt üblicherweise in einem Temperaturbereich zwischen Raumtemperatur und 200°C.

Die erfindungsgemäße Epoxidharzformulierung sowie das ausgehärtete Epoxidharz weisen einen Gesamtphosphorgehalt von vorzugsweise 0,5-5 Gew.-%, und besonders bevorzugt 2,0-2,5 Gew.-% auf. Es hat sich herausgestellt, daß schon mit den genannten Phosphoranteilen ein ausreichender Flammschutz bereitgestellt werden kann. Gleichzeitig ist auch die Schlagzähigkeit des mit dem Polyester-Flammschutzmittel ausgerüsteten ausgehärteten Epoxidharzes gegenüber herkömmlichen, mit DOPO flammfest ausgerüsteten Epoxidharzen erheblich verbessert. So können flammgeschützte halogenfreie Epoxidharze mit einer Schlagzähigkeit von über 10 kJ/m² erhalten werden.

Die flammfest ausgerüstete Epoxidharzformulierung kann ohne jede Beschränkung zur Herstellung der üblichen Kunstharz-Composites verwendet werden. Sie dient vorzugsweise der Herstellung von Platten und Bauteilen für den Fahrzeugbau, Luftfahrtbau sowie anderen Gegenständen auf dem Gebiet der Elektronik, bei denen es auf einen wirksamen Flammschutz besonders ankommt, und eignet sich insbesondere für Werkstoffe, die in der Elektroisolationstechnik benötigt werden.

### Ausführungsbeispiele

Die Erfindung wird nachfolgend anhand von Ausführungsbeispielen näher erläutert.

Als Epoxidharz wird in den Beispielen die Formulierung Epicote^{™} 828 der Fa. Hexion verwendet. Epicote^{™} 828 ist ein durch Umsetzung von Bisphenol A mit Epichlorhydrin hergestelltes Harz mit einem Epoxygruppengehait von zwischen 5260 und 5420 mmol/kg und einer Viskosität bei 25°C von zwischen 12,0 und 14,0 Pa.s.

### Beispiel 1

Zur Herstellung des Polyester-Flammschutzmittels wurden in einer einstufigen Synthese 324 Gewichtsteile DOPO mit 147 Gewichtsteilen Maleinsäureanhydrid, 124 Gewichtsteilen Monoethylenglykol und 134 Gewichtsteilen Methyloxaphospholan bei etwa 200°C, gegen Reaktionsende unter Abdestillation von Kondensationswasser unter Vakuum, zu einem Polyester der obigen Formel (III) mit R¹ = - CH₂-CH₂- und R² = Methyl umgesetzt. Die Umsetzung kann jedoch auch zweistufig erfolgen, wobei zunächst das DOPO-Addukt an Maleinsäureanhydrid gemäß den Vorschriften der DE 26 46 218 hergestellt und dieses Addukt weiter mit den entsprechenden Mengen Glykol und Oxaphospholan umgesetzt wird.

Das mittlere Molekulargewicht des so erhaltenen Polyester-Flammschutzmittels betrug etwa M = 1400 g/mol. Der Phosphorgehalt lag bei etwa 11 Gew.-%.

### Beispiel 2

Aus 32,5 Gewichtsteilen des Polyester-Flammschutzmittels aus Beispiel 1 und 67,5 Gewichtsteilen Epoxynovolak (erhältlich als DEN 438 von Dow Chemicals) wurde eine Epoxidharz-Vormischung hergestellt. Diese Epoxidharz-Vormischung wurde mit 100 Gewichtsteilen Epicote^{™} 828 abgemischt. Die so hergestellte Epoxidharzformulierung hatte damit einen Phosphorgehalt von etwa 2 Gew.-%. Anschließend wurde diese Epoxidharzformulierung mit 12 Gewichtsteilen Dicyandiamid und 4 Gewichtsteilen Urone^{™} 300 (ein Harnstoffderivat, erhältlich von Degussa) als Beschleuniger bei etwa 180°C gehärtet.

Das ausgehärtete Epoxidharz hatte eine Schlagzähigkeit von 15 kJ/qm.

### Vergleichsbeispiel

100 Gewichtsteile eines Gemischs aus DOPO und Epoxynovolak mit einem Phosphorgehalt von 3,8 Gew.-% Phosphor, erhältlich als Struktol^{™} VP 3735 von Schill + Seilacher "Struktol" AG, und 100 Gewichtsteile Epicote^{™} 828 wurden mit 12 Gewichtsteilen Dicyandiamid und 4 Gewichtsteilen Urone^{™} 300 gemischt und bei 180°C gehärtet. Das so hergestellte ausgehärtete Epoxidharz bestand den Flammtest UL 94 mit der Stufe V 0. Die Schlagzähigkeit der Proben wurde mit 5 kJ/qm ermittelt.

### Beispiel 3

Das in Ausführungsbeispiel 2 erhaltene gehärtete Epoxidharz wurde gemäß dem Underwriter's Laboratories Standard UL 94 V-2 - V-0 (Vertical Burning Test) geprüft.

Zur Untersuchung der flammhemmenden Eigenschaften wurden jeweils 3,2 mm dicke Platten aus dem gehärteten Epoxidharz hergestellt und diese nach der Brandschutznorm UL 94 V geprüft. Bei dieser Prüfung werden vertikal eingespannte Prüfkörper während 10 Sekunden am unteren Ende des Prüfkörpers beflammt. Nach Verlöschen der Flamme wird der Vorgang für weitere 10 Sekunden wiederholt. Dies wird an fünf Prüfkörpern durchgeführt. Die Brenn- und Glühzeiten werden notiert sowie die Summe daraus gebildet. Weiterhin wird festgehalten, ob vom Prüfkörper Tropfen abfallen und sich dabei Watte unterhalb des Prüfkörpers entzündet. Die Einstufungen nach UL 94 V reichen von V-2 bis zur besten Klasse V-0. Für die Einstufung nach V-0 oder V-1 darf die Watte nicht durch glühende oder brennende Tropfen entzündet werden. V-2 erlaubt das Entflammen der Watte.

Die Prüfkriterien sind übersichtlich in der nachfolgenden Tabelle angegeben.

| Prüfkriterium | V-0 | V-1 | V-2 |
|---|---|---|---|
| Brenndauer, 1. Entflammen (1 St.) | ≤ 10 s | ≤ 30s | 30 s |
| Brenn- u. Glühdauer, 2. Entflammen (1. St.) | ≤ 30 s | ≤ 60 s | ≤ 60 s |
| Gesamtbrenndauer, 1.+2. Entflammen (5 St.) | ≤ 50 s | ≤ 250 s | ≤ 250 s |
| Watte entzündet | Nein | Nein | Ja |

Die gemäß Ausführungsbeispiel 2 erhaltenen gehärteten Probenkörper aus der erfindungsgemäßen Epoxidharzformulierung erfüllen sämtlich die Brandschutznorm UL 94 V-0.

## Patentansprüche

1. Härtbare Epoxidharzformulierung mit einem Epoxidharz und einem Polyester-Flammschutzmittel, **dadurch gekennzeichnet, daß** das Flammschutzmittel ein phosphorhaltiger Polyester ist, der erhältlich ist durch
Umsetzung von phosphorhaltigen Monomeren miteinander und/oder wahlweise mit esterbildenden Monomeren unter Bildung des phosphorhaltigen Polyesters, wobei das phosphorhaltige Monomer ausgewählt ist aus den Additionsprodukten von 9,10-Dihydro-9-oxa-10-phospha-phenanthren-10-oxid (DOPO) und kernsubstituierten DOPO-Derivaten an ungesättigte Verbindungen aus der Gruppe der ein- und mehrwertigen Carbonsäuren und deren Anhydride, ein- und mehrwertigen Alkoholen und Hydroxycarbonsäuren, und
wobei der phosphorhaltige Polyester reaktive funktionelle Gruppen aufweist, die aus Carbonsäuregruppen und Phosphinsäuregruppen ausgewählt sind.

2. Epoxidharzformulierung nach Anspruch 1, **dadurch gekennzeichnet, daß** die reaktive funktionelle Gruppe eine endständige Phosphinsäuregruppe ist.

3. Epoxidharzformulierung nach Anspruch 1 oder 2, **dadurch gekennzeichnet, daß** das phosphorhaltige Monomer eine Verbindung der folgenden Formel (I) umfaßt: 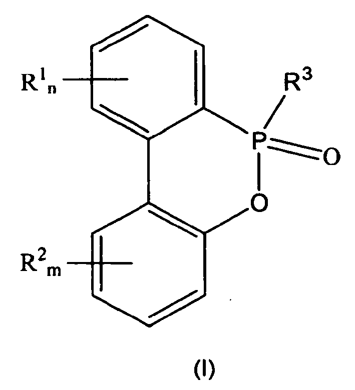 worin R¹ und R² gleich oder verschieden sind und jeweils unabhängig voneinander Alkyl, Alkoxy, Aryl, Aryloxy oder Aralkyl bedeuten, n und m ganze Zahlen von 0 bis 4 sind und R³ einen Rest darstellt, der wenigstens eine esterbildende Gruppe enthält.

4. Epoxidharzformulierung nach einem der vorhergehenden Ansprüche, **dadurch gekennzeichnet, daß** das phosphorhaltige Monomer ein Addukt von DOPO oder einem kernsubstituierten DOPO-Derivat an eine ungesättigte, ein- oder mehrwertige Carbonsäure ist.

5. Epoxidharzformulierung nach einem der Ansprüche 1 bis 3, **dadurch gekennzeichnet, daß** das phosphorhaltige Monomer ein Addukt von DOPO oder einem kernsubstituierten DOPO-Derivat an einen ungesättigten, ein- oder mehrwertigen Alkohol ist.

6. Epoxidharzformulierung nach einem der Ansprüche 1 bis 3, **dadurch gekennzeichnet, daß** das phosphorhaltige Monomer ein Gemisch der Addukte von DOPO oder einem kernsubstituierten DOPO-Derivat an eine ungesättigte, ein- oder mehrwertige Carbonsäure und einen ungesättigten, ein- oder mehrwertigen Alkohol ist.

7. Epoxidharzformulierung nach einem der Ansprüche 1 bis 3, **dadurch gekennzeichnet, daß** das phosphorhaltige Monomer ein Addukt von DOPO oder einem kernsubstituierten DOPO-Derivat an eine ungesättigte Hydroxycarbonsäure ist.

8. Epoxidharzformulierung nach einem der vorhergehenden Ansprüche, **dadurch gekennzeichnet, daß** das esterbildende Monomer eine Verbindung aus der Gruppe der gesättigten und ungesättigten Mono- und Dicarbonsäuren, gesättigten und ungesättigten Carbonsäureanhydriden, und der gesättigten und ungesättigten ein- und mehrwertigen Alkohole umfasst.

9. Epoxidharzformulierung nach einem der vorhergehenden Ansprüche, **dadurch gekennzeichnet, daß** das phosphorhaltige Monomer das Addukt von DOPO oder einem ringsubstituierten DOPO-Derivat an eine ungesättigte Mono- oder Dicarbonsäure oder ein ungesättigtes Carbonsäureanhydrid ist und das esterbildende Monomer einen gesättigten ein- oder mehrwertigen Alkohol umfasst.

10. Epoxidharzformulierung nach einem der vorhergehenden Ansprüche, **dadurch gekennzeichnet, daß** das esterbildende Monomer ein Oxaphospholan umfaßt.

11. Epoxidharzformulierung nach einem der vorhergehenden Ansprüche, **dadurch gekennzeichnet, daß** das Oxaphospholan ausgewählt ist aus Verbindungen der folgenden Formel (II): 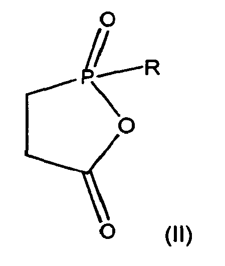 worin R Alkyl oder Aryl, vorzugweise C₁₋₆-Alkyl oder Phenyl, bedeutet.

12. Epoxidharzformulierung nach einem der vorhergehenden Ansprüche, **dadurch gekennzeichnet, daß** der Phosphorgehalt des phosphorhaltigen Polyesters zwischen etwa 4 und 12 Gew.-% beträgt.

13. Epoxidharzformulierung nach einem der vorhergehenden Ansprüche, **dadurch gekennzeichnet, daß** das mittlere Molekulargewicht MG des phosphorhaltigen Polyesters zwischen etwa 1000 und 10000 g/mol beträgt.

14. Epoxidharzformulierung nach einem der vorhergehenden Ansprüche, **dadurch gekennzeichnet, daß** das Epoxidharz aus der Gruppe der Epoxynovolake und Glycidylether von Bisphenolen oder aliphatischen Polyolen ausgewählt ist.

15. Epoxidharzformulierung nach einem der vorhergehenden Ansprüche, **gekennzeichnet durch** einen Gesamtphosphorgehalt von 0,5-5 Gew.-%.

16. Epoxidharzformulierung nach Anspruch 15, **gekennzeichnet durch** einen Gesamtphosphorgehalt von 1,5-2,5 Gew.-%.

## Claims

1. A curable epoxy resin formulation comprising an epoxy resin and a polyester flame retardant, **characterized in that** the flame retardant is a phosphorus-containing polyester which is obtainable by
reacting phosphorus-containing monomers with each other and/or optionally with ester-forming monomers to form the phosphorus-containing polyester, the phosphorus-containing monomer being selected from the addition products of 9,10-dihydro-9-oxa-10-phospha-phenanthrene-10-oxide (DOPO) and nuclear-substituted DOPO derivatives to unsaturated compounds from the group of monovalent and polyvalent carboxylic acids and anhydrides thereof, monovalent and polyvalent alcohols and hydroxycarboxylic acids, and
the phosphorus-containing polyester including reactive functional groups selected from carboxylic acid groups and phosphinic acid groups.

2. The epoxy resin formulation according to claim 1, **characterized in that** the reactive functional group is a terminal phosphinic acid group.

3. The epoxy resin formulation according to claim 1 or 2, **characterized in that** the phosphorus-containing monomer comprises a compound of the following formula (1): 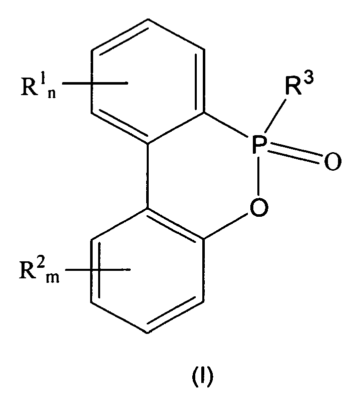 where R¹ and R² are equal or different and each independently of one another represent alkyl, alkoxy, aryl, aryloxy or aralkyl, n and m are integers from 0 to 4, and R³ represents a residue containing at least one ester-forming group.

4. The epoxy resin formulation according to any of the preceding claims, **characterized in that** the phosphorus-containing monomer is an adduct of DOPO or a nuclear-substituted DOPO derivative to an unsaturated, monovalent or polyvalent carboxylic acid.

5. The epoxy resin formulation according to any of claims 1 to 3, **characterized in that** the phosphorus-containing monomer is an adduct of DOPO or a nuclear-substituted DOPO derivative to an unsaturated, monovalent or polyvalent alcohol.

6. The epoxy resin formulation according to any of claims 1 to 3, **characterized in that** the phosphorus-containing monomer is a mixture of the adducts of DOPO or a nuclear-substituted DOPO derivative to an unsaturated, monovalent or polyvalent carboxylic acid and to an unsaturated, monovalent or polyvalent alcohol.

7. The epoxy resin formulation according to any of claims 1 to 3, **characterized in that** the phosphorus-containing monomer is an adduct of DOPO or a nuclear-substituted DOPO derivative to an unsaturated hydroxycarboxylic acid.

8. The epoxy resin formulation according to any of the preceding claims, **characterized in that** the ester-forming monomer comprises a compound from the group of saturated and unsaturated mono- and dicarboxylic acids, saturated and unsaturated carboxylic acid anhydrides, and of saturated and unsaturated monovalent and polyvalent alcohols.

9. The epoxy resin formulation according to any of the preceding claims, **characterized in that** the phosphorus-containing monomer is the adduct of DOPO or a ring-substituted DOPO derivative to an unsaturated mono- or dicarboxylic acid or an unsaturated carboxylic acid anhydride, and the ester-forming monomer comprises a saturated monovalent or polyvalent alcohol.

10. The epoxy resin formulation according to any of the preceding claims, **characterized in that** the ester-forming monomer comprises an oxaphospholane.

11. The epoxy resin formulation according to any of the preceding claims, **characterized in that** the oxaphospholane is selected from compounds of the following formula (II): 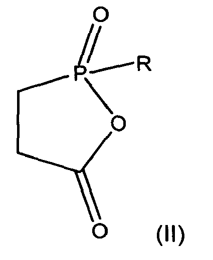 where R represents alkyl or aryl, preferably C₁₋₆ alkyl or phenyl.

12. The epoxy resin formulation according to any of the preceding claims, **characterized in that** the phosphorus content of the phosphorus-containing polyester amounts to between about 4 and 12 percent by weight.

13. The epoxy resin formulation according to any of the preceding claims, **characterized in that** the mean molecular weight MG of the phosphorus-containing polyester amounts to between about 1000 and 10000 g/mol.

14. The epoxy resin formulation according to any of the preceding claims, **characterized in that** the epoxy resin is selected from the group of epoxy novolaks and glycidyl ethers of bisphenols or aliphatic polyols.

15. The epoxy resin formulation according to any of the preceding claims, **characterized by** a total phosphorus content of 0.5-5 percent by weight.

16. The epoxy resin formulation according to claim 15, **characterized by** a total phosphorus content of 1.5-2.5 percent by weight.

## Revendications

1. Formulation de résine époxy durcissable comportant une résine époxy et un agent ignifuge polyester, **caractérisée en ce que** l'agent ignifuge est un polyester contenant du phosphore pouvant être obtenu par
la réaction de monomères contenant du phosphore les uns avec les autres et/ou optionnellement avec des monomères formant des esters de manière à former le polyester contenant du phosphore, le monomère contenant du phosphore étant choisi parmi les produits d'addition de 9,10-dihydro-9-oxa-10-phospha-phénanthrène-10-oxyde (DOPO) et de dérivés de DOPO substitués sur le noyau à des composés non saturés parmi le groupe des acides carboxyliques monovalents et polyvalents et leurs anhydrides, les alcools monovalents et polyvalents et les acides hydroxycarboxyliques, et
le polyester contenant du phosphore présentant des groupes fonctionnels réactifs choisis parmi des groupes d'acides carboxyliques et des groupes d'acides phosphiniques.

2. Formulation de résine époxy selon la revendication 1, **caractérisée en ce que** le groupe fonctionnel réactif est un groupe d'acide phosphinique terminal.

3. Formulation de résine époxy selon la revendication 1 ou 2, **caractérisée en ce que** le monomère contenant du phosphore comprend un composé de la formule (1) suivante : 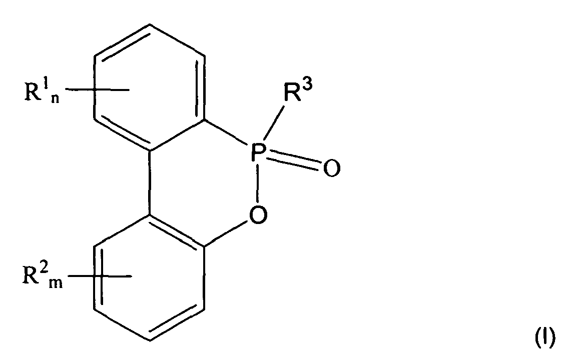 R¹ et R² étant identiques ou différents et représentant chacun indépendamment l'un de l'autre de l'alkyle, de l'alkoxy, de l'aryle, de l'aryloxy ou de l'aralkyle, n et m étant des nombres entiers de 0 à 4, et R³ représentant un reste contenant au moins un groupe formant de l'ester.

4. Formulation de résine époxy selon l'une des revendications précédentes, **caractérisée en ce que** le monomère contenant du phosphore est un adduit de DOPO ou d'un dérivé de DOPO substitué sur le noyau à un acide carboxylique non saturé monovalent ou polyvalent.

5. Formulation de résine époxy selon l'une des revendications 1 à 3, **caractérisée en ce que** le monomère contenant du phosphore est un adduit de DOPO ou d'un dérivé de DOPO substitué sur le noyau à un alcool non saturé monovalent ou polyvalent.

6. Formulation de résine époxy selon l'une des revendications 1 à 3, **caractérisée en ce que** le monomère contenant du phosphore est un mélange des adduits de DOPO ou d'un dérivé de DOPO substitué sur le noyau à un acide carboxylique non saturé monovalent ou polyvalent et à un alcool non saturé monovalent ou polyvalent.

7. Formulation de résine époxy selon l'une des revendications 1 à 3, **caractérisée en ce que** le monomère contenant du phosphore est un adduit de DOPO ou d'un dérivé de DOPO substitué sur le noyau à un acide hydroxycarboxylique non saturé.

8. Formulation de résine époxy selon l'une des revendications précédentes, **caractérisée en ce que** le monomère formant un ester comporte un composé
parmi le groupe des acides monocarboxyliques et dicarboxyliques saturés et non saturés, des anhydrides d'acide carboxylique saturés et non saturés et des alcools saturés et non saturés monovalents et polyvalents.

9. Formulation de résine époxy selon l'une des revendications précédentes, **caractérisée en ce que** le monomère contenant du phosphore est l'adduit de DOPO ou d'un dérivé de DOPO substitué sur le noyau cyclique à un acide monocarboxylique ou dicarboxylique non saturé ou un anhydride d'acide carboxylique non saturé, et **en ce que** le monomère formant un ester comprend un alcool saturé monovalent ou polyvalent.

10. Formulation de résine époxy selon l'une des revendications précédentes, **caractérisée en ce que** le monomère formant un ester comprend un oxaphospholane.

11. Formulation de résine époxy selon l'une des revendications précédentes, **caractérisée en ce que** l'oxaphospholane est choisi parmi les composés ayant la formule (11) suivante : 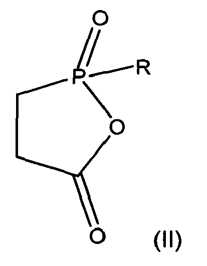 R signifiant de l'alkyle ou de l'aryle, de préférence de l'alkyle C₁₋₆ ou du phényle.

12. Formulation de résine époxy selon l'une des revendications précédentes, **caractérisée en ce que** la teneur en phosphore du polyester contenant du phosphore est entre environ 4 et 12 % en poids.

13. Formulation de résine époxy selon l'une des revendications précédentes, **caractérisée en ce que** le poids moléculaire moyen MG du polyester contenant du phosphore est entre environ 1000 et 10000 g/mol.

14. Formulation de résine époxy selon l'une des revendications précédentes, **caractérisée en ce que** la résine époxy est choisie parmi le groupe des époxys novolaques et des éthers de glycidyle de bisphénols ou de polyols aliphatiques.

15. Formulation de résine époxy selon l'une des revendications précédentes, **caractérisée par** une teneur totale en phosphore de 0,5-5 % en poids.

16. Formulation de résine époxy selon la revendication 15, **caractérisée par** une teneur totale en phosphore de 1,5-2,5 % en poids.
